# FASCICULE DE BREVET EUROPEEN

(11) **EP 4 540 879 B1**
(45) Date de publication et mention de la délivrance du brevet: **06.05.2026**
(21) Numéro de dépôt: 23732935.4
(22) Date de dépôt: 15.06.2023
(51) Int. Cl.: H01M 8/04225, H01M 8/04858, H01M 8/04313, H01M 16/00

(54) **SYSTEME UNIVERSEL DE PILE À COMBUSTIBLE**
UNIVERSELLES BRENNSTOFFZELLENSYSTEM
UNIVERSAL FUEL CELL SYSTEM

(30) Priorité: 20.06.2022 FR 2206030
(43) Date de publication de la demande: 23.04.2025
(73) Titulaire: ARM Group, 81600 Montans (FR)
(72) Inventeur: LAMBEC, Marc, 81600 MONTANS (FR)
(74) Mandataire: Bringer IP
(86) Numéro de dépôt international: PCT/EP2023/066090
(87) Numéro de publication internationale: WO 2023/247313

(56) Documents cités:
- EP-A1- 2 175 265
- EP-A1- 3 557 236
- EP-A2- 1 055 545
- DE-A1- 102022 204 040
- US-A1- 2009 112 384
- US-A1- 2012 270 126
- US-A1- 2020 052 313

## Description

### Domaine technique de l'invention

L'invention concerne le domaine des piles à combustibles, en particulier des piles à combustibles destinées à équiper des véhicules de transport, tels que des véhicules automobiles. Cela étant, l'invention ne se limite pas aux seuls véhicules de transport et s'étend à tout équipement mettant en œuvre une pile à combustible, tel qu'un chargeur de véhicule électrique fixe ou mobile, un groupe électrogène, etc. Selon une variante de réalisation, le système selon l'invention peut alimenter un bâtiment en énergie électrique.

### Arrière-plan technologique

Il existe aujourd'hui un engouement fort pour équiper les véhicules de transport, en particulier les véhicules automobiles, de piles à combustibles dans la mesure où ces piles forment des sources d'énergie propres, fiables et flexibles.

US 2020/052313 A1 et US 2009/112384 A1 décrivent des piles à combustible pour des véhicules.

Le principe à la base d'une pile à combustible (aussi désignée par l'acronyme PAC dans la suite du texte), telle qu'une pile à hydrogène, repose sur la séparation de l'eau sous l'effet d'un courant électrique (électrolyse) en dihydrogène et dioxygène. Ces deux molécules constituent le combustible chimique sous lequel l'énergie peut être stockée au sein d'une application de piles à combustible. Une seconde réaction assurée par la pile à combustible en tant que telle permet d'inverser le processus et de produire de l'électricité à partir de ces deux combustibles.

La pile à combustible en tant que telle est donc un générateur électrique à deux électrodes qui permet de produire de l'énergie électrique par une oxydation sur une électrode d'un combustible réducteur, tel que l'hydrogène, couplée à une réduction sur l'autre électrode d'un oxydant, tel que l'oxygène de l'air par exemple.

La réaction d'oxydoréduction de la pile permet de générer non seulement de l'électricité, mais également des sous-produits tels que de l'eau, de la chaleur et de l'air appauvri en oxygène.

L'un des inconvénients des solutions de piles à combustibles actuelles est la spécificité de la pile par rapport à son utilisation et/ou à son environnement. En particulier, il est aujourd'hui nécessaire d'adapter l'architecture du système de la pile à combustible au type de pile considéré et à son utilisation. En d'autres termes, il n'existe pas de système universel de piles à combustible pouvant faciliter l'intégration d'une pile à combustible quel que soit l'environnement d'utilisation de la pile, en particulier dans un véhicule de transport ou dans un système nécessitant une source d'énergie électrique.

Les inventeurs ont donc cherché à développer un nouveau système de pile à combustible qui puisse fonctionner avec tout type de piles à combustibles et tout type de carburants hydrogénés, c'est-à-dire tout type de carburants contenant de l'hydrogène. En d'autres termes, les inventeurs ont cherché à proposer un système universel de piles à combustible.

### Objectifs de l'invention

L'invention vise à fournir un système universel de piles à combustible.

L'invention vise en particulier à fournir, dans au moins un mode de réalisation, un système de piles à combustible qui puisse être mis en œuvre, quelle que soit la pile à combustible et quel que soit l'environnement de son utilisation.

L'invention vise aussi à fournir, dans au moins un mode de réalisation, un système qui puisse être rendu compact pour une utilisation dans tout type de véhicules et d'une manière générale, pour toute application nécessitant une source d'énergie électrique.

L'invention vise aussi à fournir, dans au moins un mode de réalisation, un système qui puisse fonctionner avec différents types de carburant.

L'invention vise aussi à fournir, dans au moins un mode de réalisation, un système qui puisse former une source d'énergie électrique et thermique.

### Exposé de l'invention

Pour ce faire, l'invention concerne un système de pile à combustible comprenant :
- au moins une pile à combustible,
- au moins un circuit de carburant comprenant au moins un réservoir de carburant hydrogéné, une pompe à carburant et un reformeur, ledit circuit étant relié à ladite pile pour pouvoir l'alimenter en dihydrogène,
- au moins un circuit d'air comprenant au moins une entrée d'air, un filtre à air, un compresseur et une vanne de régulation, ledit circuit d'air étant relié à ladite pile à combustible pour pouvoir l'alimenter en dioxygène,
- au moins un consommateur électrique configuré pour pouvoir être alimenté par l'énergie électrique produite par ladite pile par une réaction d'oxydoréduction entre ledit dihydrogène fourni par le circuit de carburant et le dioxygène fourni par ledit circuit d'air,
- une pluralité d'organes de régulation dudit système parmi lesquels ladite pompe du circuit de carburant et ladite vanne du circuit d'air,
- une pluralité de capteurs d'environnement configurés pour pouvoir fournir des informations représentatives de l'environnement dudit système.

Le système de piles à combustible selon l'invention est caractérisé en ce qu'il comprend en outre un boitier électronique de pilotage de la pile à combustible comprenant :
- un module de précharge de la pile à combustible configuré pour pouvoir être relié électriquement à ladite pile à combustible par une ligne, dite ligne haute tension, et pour pouvoir alimenter ledit consommateur électrique en énergie électrique,
- un module de commande configuré pour pouvoir recevoir des données issues de ladite pluralité de capteurs d'environnement et pour pouvoir en déduire des instructions de commande de ladite pluralité d'organes de régulation dudit système.

En outre et selon l'invention, le boitier électronique de pilotage de ladite pile à combustible étant configuré pour placer le système, selon les informations d'environnement fournies par lesdits capteurs, dans une pluralité de modes de fonctionnement choisis parmi les modes suivants :
- un mode de fonctionnement par défaut, dit automatique, dans lequel ladite pluralité d'organes de régulation est commandée en fonction de variables pré-programmées, représentatives d'une contrainte d'utilisation prédéterminée dudit système,
- un mode de fonctionnement, dit manuel, dans lequel ladite pluralité d'organes de régulation est commandée en fonction de variables imposées par un opérateur,
- un mode de fonctionnement, dit mode de sécurité automatique, dans lequel ladite pluralité d'organes de régulation est commandée pour couper l'alimentation de la pile à combustible, lorsque lesdits capteurs fournissent des valeurs s'écartant d'intervalles prédéterminés.

Le système de piles à combustibles selon l'invention est donc remarquable dans la mesure où il met en œuvre un boitier électronique de pilotage du système qui comprend deux modules principaux : un module de précharge destiné à relier électriquement la ligne haute tension de la PAC et un consommateur électrique (tel qu'une batterie électrique, un moteur électrique, etc.) et un module de commande configuré pour piloter les organes de régulation du système et donc des circuits d'alimentation en carburant hydrogéné et en air de la pile en fonction d'informations représentatives de l'environnement de la PAC.

Ledit module de précharge est formé de relais hautes puissances agencés entre une sortie haute tension de la PAC et le consommateur électrique du système. Ce module de précharge a pour rôle de permettre la liaison électrique haute tension entre la PAC et le consommateur électrique quels que soient la pile et le consommateur, lors du démarrage et de l'arrêt de la pile pour protéger les composants électriques du système. En d'autres termes, le module de précharge permet le couplage et le découplage entre la pile à combustible et le consommateur. Ce module étant directement logé dans le boitier électronique de commande, le boitier peut directement accéder aux données de tension et de courant et les fournir au module de commande pour en déduire les instructions de commande des organes de régulation.

Le module de précharge comprend de préférence deux sous-modules. Le premier sous-module, dit sous-module haute tension, comprend les relais hautes puissances, des équipements de contrôle des relais et des fusibles. Le deuxième sous-module, dit sous-module basse tension, comprend des équipements de contrôle des tensions et des relais, une horloge interne et des moyens de détermination et transmission d'informations d'état du module de précharge vers un bus de communication.

Le module de commande a pour fonction de commander les organes de régulation du système, ce qui permet *in fine* de déterminer le courant et la tension produite par la pile à combustible. Ce module de commande reçoit en entrée des informations fournies par les capteurs du système. Il peut par exemple s'agir de données issues de capteurs d'environnement du système et/ou de données issues de capteurs d'état du système. Ce module en déduit une commande de la pompe du circuit de carburant et/ou injecteurs, du compresseur du circuit d'air, et de manière générale de l'ensemble des organes de régulation du système.

Ainsi, le système selon l'invention peut adapter le pilotage de la pile à son environnement extérieur et/ou à son utilisation et/ou à son état.

En outre, le système est compact dans la mesure où il regroupe au sein du même boitier électronique de pilotage, le module de précharge de la pile et le module de commande de la pile. L'encombrement d'un système selon l'invention est donc réduit.

Le compresseur du circuit d'air est destiné à comprimer l'air avant de l'injecter dans la pile à combustible. Ce compresseur est avantageusement piloté par le module de pilotage du boitier électronique pour adapter le débit d'air aux variations de courant et pour assurer la régulation de température de la PAC.

Selon l'invention, le boitier électronique de pilotage de ladite pile à combustible est configuré pour placer le système, selon les informations d'environnement fournies par lesdits capteurs, dans une pluralité de modes de fonctionnement choisis parmi au moins les modes suivants :
- un mode de fonctionnement par défaut, dit automatique, dans lequel ladite pluralité d'organes de régulation est commandée en fonction de variables pré-programmées représentatives d'une contrainte d'utilisation prédéterminée du système tel que par exemple le cout de l'électricité, les émissions de CO2, l'efficacité énergétique et la disponibilité de l'énergie renouvelable,
- un mode de fonctionnement, dit manuel, dans lequel ladite pluralité d'organes de régulation est commandée en fonction de variables imposées par un opérateur. Cela peut consister à contrôler le débit de l'hydrogène, de l'oxygène, de la pression d'air, de la température. Lorsque le mode manuel est désactivé, le système bascule automatiquement dans le mode automatique par défaut.
- un mode de fonctionnement, dit mode de sécurité automatique, dans lequel ladite pluralité d'organes de régulation est commandée pour couper l'alimentation de la pile à combustible. Ce mode vise à prévenir les situations potentiellement dangereuses en coupant automatiquement la pile à combustible si certaines conditions de sécurité sont dépassés. Ces conditions comprennent notamment des niveaux de courant, de température, de pression et de débit d'hydrogène qui sortent d'intervalles de valeurs prédéterminées.

Avantageusement et selon l'invention, le circuit de carburant comprend en outre un reformeur.

Le reformeur du circuit de carburant est destiné à convertir le carburant hydrogéné en dihydrogène pour qu'il puisse ensuite réagir avec le dioxygène fourni par le circuit d'air. Plus particulièrement, le reformeur est configuré pour permettre d'extraire le dihydrogène du carburant hydrogéné. En d'autres termes, le reformeur permet de séparer le dihydrogène des autres atomes présents dans le carburant hydrogéné grâce à une oxydation partielle à base de Nickel, Cuivre, Zinc, Aluminium et/ou par vaporeformage avec de l'eau sous des températures de fonctionnement comprises entre 250 et 350°C. Ce carburant hydrogéné est par exemple du méthanol, de l'éthanol, un hydrocarbure, etc. Le reformeur comprend un catalyseur, un bruleur et/ou des résistances chauffantes permettant de faire la séparation décrite précédemment.

Comme indiqué précédemment, le système selon l'invention peut être utilisé avec tout type de carburants hydrogénés. A ce titre, le réservoir de carburant peut être un réservoir de méthanol, d'éthanol, ou d'un hydrocarbure.

Selon une variante de l'invention, le réservoir de carburant est un réservoir de Butane, de Propane, de Méthane, de Gaz naturel ou Gaz de pétrole liquéfié. Dans ce cas, le reformeur est remplacé par des injecteurs, des vannes de coupure et de purge, d'un ventilateur pour la recirculation du gaz dans la pile et d'un déshumidificateur. Pour les PAC à oxyde solide (SOFC) alimentées par gaz, le reformage est dit « directe » dans la pile mais il est nécessaire de la chauffer à 800-900°C. Aussi, il est nécessaire d'ajouter des bruleurs gaz autour de la PAC pour chauffer le corps de celle-ci.

Avantageusement, le système selon l'invention comprend en outre un circuit de récupération de la chaleur produite par ladite pile à combustible.

Selon cette variante avantageuse, la chaleur produite par la pile lors de sa réaction d'oxydoréduction est récupérée par un circuit de récupération de chaleur. Cette récupération est également pilotée par le boitier électronique de pilotage du système. Par exemple, la pluralité de capteurs peut comprendre au moins une sonde de température de l'air ou de l'eau produite par la pile et ladite pluralité d'organes de régulation peut comprendre une vanne (ou un clapet) agencée sur une conduite reliant la sortie d'air de la pile à combustible et le circuit de récupération de chaleur.

Avantageusement et selon l'invention, le système comprend en outre un circuit de refroidissement comprenant au moins un réservoir d'eau, une pompe, et un radiateur avec ventilateurs ledit circuit de refroidissement étant relié à ladite pile pour pouvoir l'alimenter en eau de refroidissement.

Le système selon cette variante permet de refroidir la pile en alimentant un circuit de refroidissement à partir d'un réservoir d'eau. Ce circuit d'eau peut aussi récupérer l'eau produite par la pile lors de la réaction d'oxydoréduction.

Avantageusement et selon l'invention, le système comprend en outre un échangeur de chaleur eau/air agencé sur le circuit d'air et sur le circuit d'eau de manière à pouvoir assurer des échanges thermiques entre les deux circuits pour réduire la température de l'air comprimé.

Le système selon cette variante permet d'assurer des échanges thermiques entre l'air du circuit d'air et l'eau du circuit de refroidissement.

Avantageusement, le circuit d'air comprend en outre un humidificateur d'air configuré pour pouvoir humidifier l'air avant son injection dans la pile à combustible. En particulier, dans une pile à combustible à membrane électrolyte polymère (connue sous l'acronyme PEMFC), les électrolytes doivent être hydratés pour maintenir une conductivité d'ions (protons) élevée et, par conséquent, une performance optimale. L'humidification des gaz d'une telle pile à combustible est essentielle et permise par l'humidificateur du système selon cette variante.

Avantageusement, ladite pluralité de capteurs d'environnement comprend au moins un capteur choisi dans le groupe comprenant un capteur de CO2, un capteur de H2, un capteur de température de l'air du circuit d'air, un capteur d'hygrométrie et un capteur de pression.

Selon cette variante avantageuse, le module de commande peut commander les organes de régulation en fonction de l'ensemble des informations fournies par les différents capteurs du système.

Les données fournies par le capteur de CO2 permettent par exemple de commander l'arrêt de la pile à combustible si un niveau de CO2 supérieur à une valeur prédéterminée est détecté dans l'environnement de la pile.

Les données fournies par le capteur de H2 permettent de mesurer les éventuelles fuites de dihydrogène au voisinage de la pile. Il est ainsi possible de prévoir que le module de commande du boitier électronique commande la fermeture des vannes d'alimentation de la pile en dihydrogène.

Les données fournies par le capteur d'hygrométrie, le capteur de température ou le capteur de pression permettent de déterminer des niveaux de densité de la masse d'air alimentant la pile. Ces données permettent notamment de déterminer la quantité de dihydrogène à injecter dans la pile à combustible. Cette quantité de dihydrogène à injecter est pilotée par la pompe à carburant et/ou par les injecteurs.

Le système selon l'invention peut aussi comprendre une sonde de niveau de carburant dans le réservoir du circuit de carburant. En fonction du niveau détecté, le module de commande peut activer ou non la pile à combustible.

Le système peut également désactiver la pile en fonction d'une température d'air ou d'eau mesurée supérieure à une valeur prédéterminée.

Avantageusement, un système selon l'invention comprend en outre au moins un capteur GPS et ledit module de pilotage est configuré pour piloter lesdits organes de régulation en fonction des données de GPS fournies par ledit capteur GPS.

Le système selon cette variante permet par exemple de commander l'arrêt de la pile à combustible si cette dernière se trouve dans une zone géographique dans laquelle l'utilisation d'une telle pile n'est pas autorisée. A titre d'exemple, il est possible avec un système selon l'invention d'empêcher le fonctionnement de la pile dans un garage public souterrain (pour des raisons de sécurité et en fonction du type de pile considéré) ou dans une zone à risques électromagnétiques.

Avantageusement et selon l'invention, ledit boitier électronique de pilotage comprend en outre des moyens de communication configurés pour recevoir des instructions de commande d'équipements distants.

Ces moyens de communication comprennent par exemple une carte Wifi, un routeur 4G/5G, un port COM, LAN ou USB de manière à pouvoir recevoir des instructions de pilotage à distance. Cet aspect de l'invention permet par exemple de charger une batterie d'un véhicule électrique, même lorsque ce dernier est éteint. On entend dans tout le texte par « équipements distants », des équipements non agencés dans le périmètre immédiat du système de pile à combustible selon l'invention.

Avantageusement et selon l'invention, le système comprend au moins deux consommateurs électriques parmi lesquels une batterie de stockage d'énergie électrique et un moteur électrique.

Le système selon cette variante de l'invention peut utilement équiper un véhicule de transport tel qu'un véhicule électrique ou un véhicule hybride. Le système permet ainsi soit de charger la batterie de stockage d'énergie électrique produite par la pile à combustible, soit d'alimenter directement un moteur électrique d'entrainement du véhicule. Dans cette variante, une dérivation est prévue entre la batterie et le moteur électrique pour pouvoir piloter, par le module de commande, la ligne de tension alimentée par la pile à combustible (après passage par le module de précharge).

Selon une autre variante de l'invention, les consommateurs électriques comprennent au moins un chargeur mobile et/ou un chargeur fixe d'un véhicule électrique.

Selon une variante de l'invention, le système est relié à un réseau électrique d'un bâtiment, lui-même relié à un réseau de fourniture d'énergie électrique extérieur.

Dans cette variante, ladite pluralité de modes de fonctionnement dans lesquels le boitier électronique peut placer le système comprend en outre les modes suivants :
- un mode de fonctionnement, dit off-grid, dans lequel la pluralité d'organes de régulation est commandée pour séparer ledit bâtiment dudit réseau de fourniture d'énergie électrique,
- un mode de fonctionnement, dit BACS, dans lequel ladite pluralité d'organes de régulation est commandée en fonction de variables d'environnement mesurées au sein dudit bâtiment.

Selon cette variante, le système est utilisé pour alimenter un bâtiment et présente au moins deux modes supplémentaires.

Le mode off-grid permet de séparer le bâtiment du réseau de fourniture d'énergie électrique pour faire du système selon l'invention un système indépendant, séparé du réseau électrique. Cela est particulièrement utile lorsque l'énergie du réseau est indisponible ou chère.

Le mode BACS permet d'optimiser l'efficacité énergétique de l'alimentation du bâtiment. Les variables à considérer comprennent notamement la température ambiante, la consommation d'énergie, le niveau de lumière, et le temps d'utilisation au sein du bâtiment.

L'invention concerne également un système de pile à combustible caractérisé en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées suivantes :
[Fig. 1] est une vue schématique d'un système de piles à combustible selon un mode réalisation de l'invention,
[Fig. 2] est une vue schématique d'un module de précharge d'un système selon un mode de réalisation de l'invention.

### Description détaillée d'un mode de réalisation de l'invention

Sur les figures, les échelles et les proportions ne sont pas strictement respectées et ce, à des fins d'illustration et de clarté.

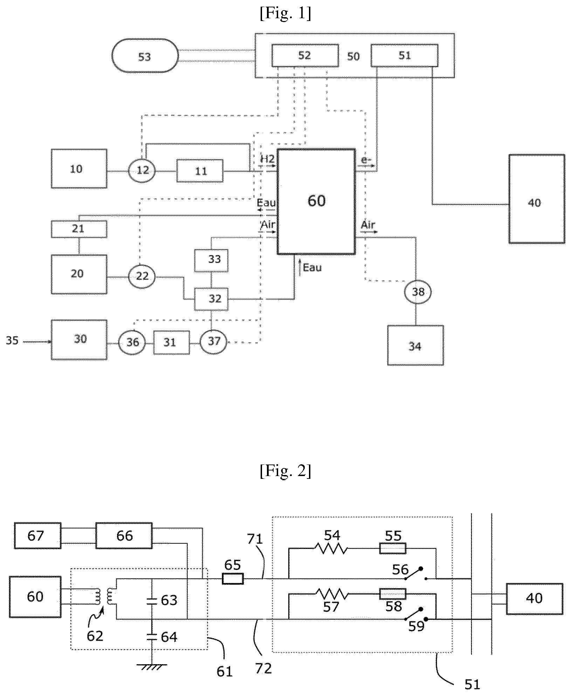

La figure 1 illustre schématiquement un système de piles à combustible selon un mode de réalisation de l'invention.

Le système comprend une pile à combustible 60. La pile à combustible selon l'invention peut être de tout type connu. Une telle pile est configurée pour pouvoir produire de l'énergie électrique par la mise en œuvre d'une réaction d'oxydoréduction entre du dihydrogène fourni par un circuit de carburant décrit ultérieurement et du dioxygène fourni par un circuit d'air décrit ultérieurement.

Le système comprend en outre un circuit de carburant, un circuit d'air, un circuit d'eau et un boitier électronique de pilotage 50.

A des fins de clarté, et sauf mention contraire, les équipements qui composent le circuit de carburant sont référencés par des nombres qui commencent par le chiffre « 1 », les équipements qui composent le circuit d'eau sont référencés par des nombres qui commencent par le chiffre « 2 » et les équipements qui composent le circuit d'air sont référencés par des nombres qui commencent par le chiffre « 3 ». A noter néanmoins, que l'échangeur de chaleur 32 est agencé à la fois sur le circuit d'eau et sur le circuit d'air.

Plus particulièrement, le circuit de carburant comprend un réservoir de carburant 10 qui contient un carburant hydrogéné tel que du méthanol, de l'éthanol ou un hydrocarbure. Le circuit de carburant comprend également un reformeur 11 destiné à extraire du dihydrogène du carburant. Ce circuit comprend également une pompe 12 à carburant destinée à faire circuler le carburant du réservoir 10 vers le reformeur 11.

Comme indiqué précédemment, le reformeur 11 comprend un catalyseur, un bruleur et/ou des résistances chauffantes pour permettre de séparer le dihydrogène des autres atomes présents dans le carburant hydrogéné grâce à une oxydation partielle à base de Nickel, Cuivre, Zinc, Aluminium et/ou par vaporeformage avec de l'eau sous des températures de fonctionnement comprises entre 250 et 350°C.

Le combustible est brûlé dans une chambre de combustion externe pour fournir de la chaleur à un vaporisateur configuré pour vaporiser le carburant vers le reformeur qui le transforme en un gaz riche en hydrogène. Le mélange gazeux produit est acheminé vers l'anode de la pile à combustible. L'air comprimé issu du circuit d'air est véhiculé vers la cathode de la pile à combustible. La chaleur produite par le système peut être récupérée par des échangeurs de chaleur, soit à partir de l'échappement du brûleur catalytique soit de la pile à combustible. Cette chaleur peut être récupérée pour alimenter le générateur de vapeur.

Le combustible est par exemple composé d'un mélange de méthanol et d'eau, qui est par exemple pré-mélangé à rapport vapeur/carbone d'environ 1,5 et pompé dans un évaporateur avant qu'il ne soit dirigé vers le reformeur. La composition du gaz de reformat peut varier sensiblement selon la conception du reformeur, la température et le débit de carburant. Pour augmenter l'efficacité du système, les gaz d'échappement de la pile à combustible sont utilisés dans l'évaporateur et la pile est actionnée avec un échappement ouvert, où l'excès d'hydrogène peut être utilisé pour chauffer le système de reformage. La quantité de l'hydrogène dans le flux de gaz dépend du débit de carburant et de la quantité d'hydrogène utilisée dans la pile à combustible.

La pompe 12 est pilotée par le module de commande 52 du boitier électronique de pilotage décrit ultérieurement. Sur la figure 1, les traits en pointillés illustrent de manière schématique les lignes de commande.

Le circuit de carburant comprend également une dérivation permettant de contourner le reformeur 11 dans le cas où le carburant utilisé ne nécessite pas d'être traité par le reformeur 11. C'est le cas notamment si le système met directement en œuvre un réservoir de dihydrogène.

A noter que dans le cas d'une PAC à oxyde solide (plus connue sous l'acronyme SOFC), le circuit de carburant peut comprendre un réservoir de Butane, de Propane, de Méthane, de Gaz naturel ou de Gaz de pétrole liquéfié, et, en remplacement du reformeur, des vannes de coupure et de purge, un ventilateur pour la recirculation du gaz dans la pile et un déshumidificateur. En particulier, pour ces PAC SOFC alimentées par gaz, le reformage est dit « directe » dans la pile mais il est nécessaire de la chauffer à 800-900°C. Aussi, des bruleurs gaz sont ajoutés autour de la PAC pour chauffer le corps de celle-ci.

Selon une autre variante, les deux types de circuit de carburant peuvent coexister au sein d'un même système. En d'autres termes, le système peut comprendre un circuit de carburant à méthanol, éthanol ou hydrocarbure et un circuit de carburant à gaz.

Le système selon le mode de réalisation de la figure 1 comprend également un circuit d'eau faisant office de circuit de refroidissement de la pile 60. Ce circuit comprend un réservoir d'eau 20, une pompe 22 destinée à faire circuler l'eau dans le circuit pour l'injecter dans la pile 60. Cette eau passe par un échangeur de chaleur eau/air 32 qui sera décrit ultérieurement en lien avec le circuit d'air.

La pile à combustible 60 produit de l'eau lors de la réaction d'oxydoréduction, et cette eau produite est récupérée par le système pour alimenter un radiateur avec ventilateurs 21 avant de rejoindre le réservoir d'eau 20.

Le système selon le mode de réalisation de la figure 1 comprend également un circuit d'air comprenant une entrée d'air 35 qui est par exemple une bouche d'admission d'air. Cette entrée d'air 35 permet d'alimenter un filtre à air 30. Une pompe d'admission 36 ou un ventilateur permet de véhiculer l'air vers un compresseur 31. Ensuite, une vanne 37 permet de réguler l'alimentation de l'échangeur thermique eau/air 32, ce dernier étant en liaison fluidique avec humidificateur 33 avant d'être injecté dans la pile à combustible 60. La pompe 36 et la vanne 37 sont pilotées par le module de commande 52 du boitier électronique de pilotage 50. L'échangeur thermique eau/air 32 comprend une matrice d'échanges thermiques configurée pour permettre de refroidir l'air du circuit d'air par l'eau du circuit d'eau. Cela permet de refroidir l'air issu du compresseur 31 avant son introduction dans la pile à combustible.

L'humidificateur d'air 33 permet d'humidifier l'air avant son injection dans la pile à combustible. Cela est particulièrement utile lorsque la pile à combustible est une pile à membrane électrolyte polymère (connue sous l'acronyme PEMFC). Dans ce cas, les électrolytes de la pile doivent être hydratés pour maintenir une conductivité d'ions (protons) élevée et, par conséquent, une performance optimale.

L'air chaud produit par la pile à combustible 60 peut ensuite alimenter un système de récupération de chaleur 34 en fonction de la commande d'une vanne 38.

Le système selon l'invention comprend en outre un boitier électronique de pilotage 50 qui comprend deux modules principaux, à savoir un module de précharge 51 de la pile à combustible et un module de commande 52 de la pile.

Le module de commande 52 reçoit des informations en provenance d'une pluralité de capteurs 53. Les capteurs 53 sont configurés pour pouvoir fournir des informations représentatives de l'environnement du système ou de l'état du système. Sur la figure 1, les capteurs ne sont pas représentés sur les circuits à des fins de clarté, étant entendu que certains capteurs sont en fait agencés sur les circuits. A titre d'exemple, le système peut comprendre des capteurs de température de l'air en entrée de la pile à combustible et/ou en sortie de la pile à combustible. Le système peut également comprendre des capteurs de mesure de la température de l'eau du circuit de refroidissement, en amont et/ou en aval de l'échangeur thermique. Le système peut également comprendre des capteurs d'environnement qui ne sont pas agencés sur les circuits. Ainsi, le système peut comprendre un capteur GPS, un capteur hygrométrique, un capteur de pression, etc..

L'ensemble des mesures fournies par les capteurs 53 sont adressées au module 52 de commande du boitier électronique de pilotage 50.

Ce module 52 en déduit des instructions de commande des organes de régulation du système parmi lesquels la pompe 12 du circuit de carburant, la pompe 22 du circuit d'eau, la pompe 36 du circuit d'air, la vanne 37 du circuit d'air et la vanne 38 du circuit d'air. Le module de commande comprend par exemple des ports d'entrées de données, une carte électronique de commande, et un logiciel embarqué sur la carte électronique. Ce module peut aussi comprendre un ou plusieurs éléments matériels destinés à mettre en œuvre les routines de commande. Ainsi, ce module peut comprendre un circuit intégré propre à une application (plus connue sous l'acronyme ASIC pour la dénomination anglaise *Application-Specific Integrated Circuit*) ou un circuit logique programmable (plus connu sous l'acronyme FPGA pour la dénomination anglaise *Field-Programmable Gate Array)* ou un circuit de microprocesseurs spécialisés (plus connu sous l'acronyme DSP pour la dénomination anglaise *Digital Signal Processor*) ou tout matériel équivalent ou toute combinaison des matériels précités.

Le module de commande est configuré pour placer le système selon l'invention dans une pluralité de modes de fonctionnement spécifiques qui dépendent des conditions d'utilisation.

Les différents modes de fonctionnement possibles sont au moins les suivants :
- un mode de fonctionnement par défaut, dit automatique, dans lequel ladite pluralité d'organes de régulation est commandée en fonction de variables pré-programmées telles que le cout de l'électricité, les émissions de CO2, l'efficacité énergétique et la disponibilité de l'énergie renouvelable,
- un mode de fonctionnement, dit manuel, dans lequel ladite pluralité d'organes de régulation est commandée en fonction de variables imposées par un opérateur telles que le débit de l'hydrogène, de l'oxygène, de la pression ou de la température,
- un mode de fonctionnement, dit mode de sécurité automatique, dans lequel ladite pluralité d'organes de régulation est commandée pour couper l'alimentation de la pile à combustible lorsque certaines conditions prédéterminées sont atteintes (niveaux de courant, de température, de pression et/ou de débit d'hydrogène supérieur à un seuil).

Le module de précharge 51 comprend de préférence deux sous-modules. Le premier sous-module, dit sous-module haute tension, comprend les relais hautes puissances, des équipements de contrôle des relais et des fusibles. Le deuxième sous-module, dit sous-module basse tension, comprend des équipements de contrôle des tensions et des relais, une horloge interne et des moyens de détermination et transmission d'informations d'état du module de précharge vers le module de commande 52. Ainsi, le module de précharge 51 peut fournir des données d'entrée au module de commande 52 et le module de commande 52 peut piloter le module de précharge 51.

Ce module de précharge 51 fait la liaison haute tension entre la pile à combustible 60 et un ou plusieurs consommateurs électriques 40. Un tel consommateur électrique 40 peut être de tout type. Il peut s'agir d'une batterie de stockage d'énergie électrique, d'un moteur électrique, d'une borne de recharge, etc.

Un convertisseur de courant continu-continu peut également être agencé en amont ou en aval du module de précharge 51.

La figure 2 illustre schématiquement la liaison haute tension entre la pile à combustible 60 et le module de précharge 51. En particulier, cette figure illustre schématiquement le sous-module haute tension du module de précharge.

Le bloc en pointillé 61 représente le module de conversion de puissance entre la pile à combustible 60 et le module de précharge 51.

La ligne 71 représente la ligne haute tension positive et la ligne 72 représente la ligne haute tension négative.

Ce module de conversion de puissance 61 comprend un convertisseur 62 CC/CC qui forme une isolation galvanique et un amplificateur de tension. Comme illustré par la figure 2, la sortie du DC/DC a une capacité importante, qui dépend de la configuration de sortie du DC/DC, mais qui dans tous les cas doit être préchargé pour éviter des courants d'appel extrêmes dans le système.

La figure 2 illustre ainsi une capacitance 63 (par exemple de 120 µF) et une capacité 64 (par exemple de 60nF). La ligne haute tension positive 71 comprend en outre un fusible 65, qui est par exemple de 10A.

Outre la capacité entre les bornes de sortie, les bornes sont également couplées capacitivement au châssis pour réduire la conductivité et le rayonnement des émissions électromagnétiques du système. Cette capacité devient importante si le potentiel du châssis fluctue par rapport à la borne de tension.

Si le potentiel du châssis et de la borne négative peut dépasser 50 Volts en courant continu, ou est inconnu, une précharge est recommandée sur les bornes positive et négative comme illustré sur la figure 2. Dans le cas où la borne négative a un potentiel défini par rapport à la borne négative inférieur à 50 V, une seule ligne de précharge est suffisante.

Au fur et à mesure que la précharge augmente la tension aux bornes, le système initie le démarrage des composants internes tels que les alimentations, les microcontrôleurs, les ventilateurs, etc. Cela demande de l'énergie. Aussi, le circuit de précharge doit être capable de fournir cette énergie. L'énergie de précharge requise est par exemple inférieur à 50W.

Le module de précharge comprend en outre une résistance de précharge 54, un fusible 55 et des relais 56 sur sa ligne positive. Il comprend également une résistance de précharge 57, un fusible 58 et des relais 59 sur sa ligne négative.

La figure 2 illustre également un transformateur 66 haute tension/basse tension configuré pour pouvoir alimenter en électricité les équipements de régulation 67 (pompes, injecteurs, capteurs, etc.) du système selon l'invention.

Le circuit de précharge doit en être dimensionné pour pouvoir fournir l'énergie nécessaire pour la mise en veille du système avec une faible chute de tension. Il faut également dimensionner la résistance de précharge de telle sorte qu'elle puisse gérer le courant d'appel ainsi que le courant de veille. Il est nécessaire de prévoir un fusible dans le circuit de précharge pour éviter un incendie dans la résistance de précharge en cas d'échec de la précharge. Il faut également dimensionner la résistance de précharge de telle sorte qu'elle puisse gérer l'énergie nécessaire pouvant faire sauter le fusible.

## Revendications

1. Système de pile à combustible comprenant :
- au moins une pile à combustible (60),
- au moins un circuit de carburant comprenant au moins un réservoir de carburant (10), une pompe à carburant (12) et/ou un injecteur, ledit circuit de carburant étant relié à ladite pile (60) pour pouvoir l'alimenter en dihydrogène,
- au moins un circuit d'air comprenant au moins une entrée d'air (35), un filtre à air (30), un compresseur (31) et une vanne de régulation (36), ledit circuit d'air étant relié à ladite pile (60) pour pouvoir l'alimenter en dioxygène,
- au moins un consommateur électrique (40) configuré pour pouvoir être alimenté par l'énergie électrique produite par ladite pile (60) par une réaction d'oxydoréduction entre le dihydrogène fourni par le circuit de carburant et le dioxygène fourni par ledit circuit d'air,
- une pluralité d'organes de régulation (12, 22, 36, 37, 38) dudit système parmi lesquels ladite pompe du circuit de carburant et/ou un injecteur et ladite vanne du circuit d'air,
- une pluralité de capteurs d'environnement (53) configurés pour pouvoir fournir des informations représentatives de l'environnement dudit système,
**caractérisé en ce que** qu'il comprend en outre un boitier électronique (50) de pilotage de la pile à combustible comprenant :
- un module de précharge (51) de la pile à combustible configuré pour pouvoir être relié électriquement à ladite pile à combustible par une ligne, dite ligne haute tension, et pour pouvoir alimenter ledit consommateur électrique en énergie électrique,
un module de commande (52) configuré pour pouvoir recevoir des données issues de ladite pluralité de capteurs et pour pouvoir en déduire des instructions de commande de ladite pluralité d'organes de régulation dudit système,
ledit boitier électronique de pilotage de ladite pile à combustible étant configuré pour placer le système, selon les informations d'environnement fournies par lesdits capteurs d'environnements, dans une pluralité de modes de fonctionnement choisis parmi les modes suivants :
- un mode de fonctionnement par défaut, dit automatique, dans lequel ladite pluralité d'organes de régulation est commandée en fonction de variables pré-programmées représentatives d'une contrainte d'utilisation prédéterminée dudit système,
- un mode de fonctionnement, dit manuel, dans lequel ladite pluralité d'organes de régulation est commandée en fonction de variables imposées par un opérateur,
- un mode de fonctionnement, dit mode de sécurité automatique, dans lequel ladite pluralité d'organes de régulation est commandée pour couper l'alimentation de la pile à combustible lorsque les valeurs fournies par lesdits capteurs d'environnement sortent d'intervalles de valeurs prédéterminées.

2. Système selon la revendication 1, **caractérisé en ce que** le système est relié au réseau électrique d'un bâtiment lui-même relié à un réseau de fourniture d'énergie électrique et **en ce que** ladite pluralité de modes de fonctionnement dans lesquels le boitier électronique peut placer le système comprend en outre les modes suivants :
- un mode de fonctionnement, dit off-grid, dans lequel la pluralité d'organes de régulation est commandée pour séparer ledit bâtiment dudit réseau de fourniture d'énergie électrique,
- un mode de fonctionnement, dit BACS, dans lequel ladite pluralité d'organes de régulation est commandée en fonction de variables d'environnement mesurées au sein dudit bâtiment.

3. Système selon l'une des revendications 1 ou 2, **caractérisé en ce que** ledit circuit de carburant comprend en outre un reformeur (11).

4. Système selon l'une des revendications 1 ou 3, **caractérisé en ce qu'**il comprend en outre un circuit de récupération (34) de la chaleur produite par ladite pile à combustible.

5. Système selon l'une des revendications 1 à 4, **caractérisé en ce qu'**il comprend en outre un circuit de refroidissement comprenant au moins un réservoir d'eau (20), un radiateur avec ventilateurs (21) et une pompe (22), ledit circuit de refroidissement étant relié à ladite pile (60) pour pouvoir l'alimenter en eau de refroidissement.

6. Système selon les revendications 4 et 5 prises ensemble **caractérisé en ce qu'**il comprend en outre un échangeur de chaleur (32) eau/air agencé sur le circuit d'air et sur le circuit d'eau de manière à pouvoir assurer des échanges thermiques entre les deux circuits.

7. Système selon l'une des revendications 1 à 6, caractérisé en ce ladite pluralité de capteurs (53) comprend au moins un capteur choisi dans le groupe comprenant un capteur de CO2, un capteur de H2, un capteur de température de l'air du circuit d'air, un capteur d'hygrométrie, un capteur de pression.

8. Système selon l'une des revendications 1 à 7, caractérisé en ce ladite pluralité de capteurs (53) comprend au moins un capteur GPS et en ce que ledit module de pilotage est configuré pour piloter lesdits organes de régulation en fonction des données de GPS fournies par ledit capteur GPS.

9. Système selon l'une des revendications 1 à 8, **caractérisé en ce que** ledit boitier électronique (50) de pilotage comprend en outre des moyens de communication configurés pour recevoir des instructions de commande d'équipements distants.

10. Système selon l'une des revendications 1 à 9, **caractérisé en ce qu'**il comprend au moins deux consommateurs électriques (40) parmi lesquels une batterie de stockage d'énergie électrique et un moteur électrique.

## Patentansprüche

1. Brennstoffzellensystem, welches umfasst:
- mindestens eine Brennstoffzelle (60),
- mindestens einen Brennstoffkreislauf, der mindestens einen Brennstofftank (10), eine Brennstoffpumpe (12) und/oder eine Einspritzdüse umfasst, worin der Brennstoffkreislauf mit der Brennstoffzelle (60) verbunden ist, um diese mit Wasserstoff zu versorgen,
- mindestens einen Luftkreislauf, der mindestens einen Lufteinlass (35), einen Luftfilter (30), einen Kompressor (31) und ein Steuerventil (36) umfasst, worin der Luftkreislauf mit der Brennstoffzelle (60) verbunden ist, um diese mit Sauerstoff zu versorgen,
- mindestens eine elektrische Last (40), die ausgestaltet ist, durch die von der Brennstoffzelle (60) erzeugte elektrische Energie über eine Redoxreaktion zwischen dem vom Brennstoffkreislauf zugeführten Wasserstoff und dem vom Luftkreislauf zugeführten Sauerstoff gespeist zu werden,
- mehrere Steuerkomponenten (12, 22, 36, 37, 38) des Systems, einschließlich der Brennstoffkreislaufpumpe und/oder eines Injektors und des Luftkreislaufventils,
- mehrere Umgebungssensoren (53), die ausgestaltet sind, Informationen zu liefern, die für die Umgebung des Systems repräsentativ sind,
**dadurch gekennzeichnet, dass** es ferner eine elektronische Steuereinheit (50) für die Brennstoffzelle umfasst, die umfasst:
- ein Brennstoffzellen-Vorlademodul (51), das ausgestaltet ist, über eine als Hochspannungsleitung bezeichnete Leitung mit der Brennstoffzelle elektrisch verbunden zu sein und die elektrische Last mit elektrischer Energie zu versorgen,
ein Steuermodul (52), das ausgestaltet ist, Daten von den mehreren Sensoren zu empfangen und daraus Steuerbefehle für die mehreren Steuerelemente des Systems abzuleiten,
worin die elektronische Steuereinheit für die Brennstoffzelle ausgestaltet ist, das System auf der Grundlage der von den Umgebungssensoren gelieferten Umgebungsinformationen auf einen von mehreren Betriebsmodi einzustellen, die aus den folgenden Modi ausgewählt werden:
- einem Standardbetriebsmodus, der als "Automatikmodus" bezeichnet wird, in dem die mehreren Steuerelemente gemäß programmierten Variablen gesteuert werden, die einen bestimmten Betriebszustand des Systems widerspiegeln,
- einem Betriebsmodus, bekannt als manueller Modus, in dem die mehreren Steuerelemente gemäß von einem Bediener eingestellten Variablen gesteuert wird,
- einem Betriebsmodus, bekannt als automatischer Sicherheitsmodus, in dem die mehreren Steuerelementen so gesteuert werden, dass die Stromversorgung der Brennstoffzelle unterbrochen wird, wenn die von den Umgebungssensoren gelieferten Werte außerhalb bestimmter Wertebereiche liegen.

2. System nach Anspruch 1, **dadurch gekennzeichnet, dass** das System an das Stromnetz eines Gebäudes angeschlossen ist, das seinerseits an ein Stromversorgungsnetz angeschlossen ist, und dass die mehreren Betriebsmodi, in die die elektronische Steuereinheit das System versetzen kann, ferner die Modi umfasst:
- einen als "Off-Grid" bezeichneten Betriebsmodus, in dem die mehreren Steuerelemente angewiesen werden, das Gebäude vom Stromversorgungsnetz zu trennen,
- einen als "BACS" bezeichneten Betriebsmodus, in dem die mehreren Steuerelemente entsprechend den innerhalb des Gebäudes gemessenen Umgebungsvariablen gesteuert werden.

3. System nach einem der Ansprüche 1 oder 2, **dadurch gekennzeichnet, dass** der Brennstoffkreislauf ferner einen Reformer (11) umfasst.

4. System nach einem der Ansprüche 1 oder 3, **dadurch gekennzeichnet, dass** es ferner einen Kreislauf (34) zur Rückgewinnung der von der Brennstoffzelle erzeugten Wärme umfasst.

5. System nach einem der Ansprüche 1 bis 4, **dadurch gekennzeichnet, dass** es ferner einen Kühlkreislauf umfasst, der mindestens einen Wassertank (20), einen Radiator mit Lüftern (21) und eine Pumpe (22) umfasst, worin der Kühlkreislauf mit der Brennstoffzelle (60) verbunden ist, um diese mit Kühlwasser zu versorgen.

6. System nach den Ansprüchen 4 und 5 zusammengenommen, **dadurch gekennzeichnet, dass** dieses ferner einen Wasser/Luft-Wärmetauscher (32) umfasst, der im Luftkreislauf und im Wasserkreislauf angeordnet ist, um den Wärmeaustausch zwischen den beiden Kreisläufen sicherzustellen.

7. System nach einem der Ansprüche 1 bis 6, **dadurch gekennzeichnet, dass** die mehreren Sensoren (53) mindestens einen Sensor umfassen, ausgewählt aus der Gruppe umfassend einen CO₂-Sensor, einen H₂-Sensor, einen Lufttemperatursensor für den Luftkreislauf, einen Feuchtigkeitssensor und einen Drucksensor.

8. System nach einem der Ansprüche 1 bis 7, **dadurch gekennzeichnet, dass** die mehreren Sensoren (53) mindestens einen GPS-Sensor umfassen und dass das Steuermodul ausgestaltet ist, die Steuerelemente auf der Grundlage von GPS-Daten zu steuern, die von dem GPS-Sensor bereitgestellt werden.

9. System nach einem der Ansprüche 1 bis 8, **dadurch gekennzeichnet, dass** die elektronische Steuereinheit (50) ferner Kommunikationsmittel umfasst, die ausgestaltet sind, Steuerbefehle für entfernte Geräte zu empfangen.

10. System nach einem der Ansprüche 1 bis 9, **dadurch gekennzeichnet, dass** dieses mindestens zwei elektrische Lasten (40) umfasst, umfassend eine elektrische Energiespeicherbatterie und einen Elektromotor.

## Claims

1. A fuel cell system comprising:
- at least one fuel cell (60),
- at least one fuel circuit comprising at least one fuel tank (10), a fuel pump (12) and/or an injector, said fuel circuit being connected to said cell (60) so as to supply it with dihydrogen,
- at least one air circuit comprising at least one air inlet (35), an air filter (30), a compressor (31) and a control valve (36), said air circuit being connected to said fuel cell (60) so as to supply it with oxygen,
- at least one electrical load (40) configured to be powered by the electrical energy produced by said fuel cell (60) via a redox reaction between the dihydrogen supplied by the fuel circuit and the oxygen supplied by said air circuit,
- a plurality of control components (12, 22, 36, 37, 38) of said system, including said fuel circuit pump and/or an injector and said air circuit valve,
- a plurality of environmental sensors (53) configured to provide information representative of the environment of said system,
**characterised in that** it further comprises an electronic control unit (50) for the fuel cell comprising:
- a fuel cell pre-charge module (51) configured to be electrically connected to said fuel cell via a line, known as a high-voltage line, and to supply said electrical load with electrical energy,
a control module (52) configured to receive data from said plurality of sensors and to derive control instructions for said plurality of control elements of said system therefrom,
said electronic control unit for said fuel cell being configured to set the system, based on the environmental information provided by said environmental sensors, to one of a plurality of operating modes selected from the following modes:
- a default operating mode, known as automatic, in which said plurality of control elements is controlled according to preprogrammed variables representative of a predetermined operating condition of said system,
- an operating mode, known as manual mode, in which said plurality of control elements is controlled according to variables set by an operator,
- an operating mode, known as automatic safety mode, in which said plurality of control elements is controlled to cut off the power supply to the fuel cell when the values provided by said environmental sensors fall outside predetermined value ranges.

2. A system according to claim 1, **characterised in that** the system is connected to the electrical network of a building which is itself connected to an electricity supply network, and **in that** the said plurality of operating modes into which the electronic control unit can place the system further comprises the following modes:
- an operating mode, known as off-grid, in which the plurality of control elements is commanded to disconnect said building from said electricity supply network,
- an operating mode, known as BACS, in which said plurality of control elements is controlled according to environmental variables measured within said building.

3. A system according to one of claims 1 or 2, **characterised in that** said fuel circuit further comprises a reformer (11).

4. A system according to one of claims 1 or 3, **characterised in that** it further comprises a circuit (34) for recovering the heat produced by said fuel cell.

5. A system according to any one of claims 1 to 4, **characterised in that** it further comprises a cooling circuit comprising at least one water tank (20), a radiator with fans (21) and a pump (22), said cooling circuit being connected to said fuel cell (60) so as to supply it with cooling water.

6. A system according to claims 4 and 5 taken together, **characterised in that** it further comprises a water/air heat exchanger (32) arranged on the air circuit and on the water circuit so as to ensure heat exchange between the two circuits.

7. A system according to any one of claims 1 to 6, **characterised in that** said plurality of sensors (53) comprises at least one sensor selected from the group comprising a CO₂ sensor, an H₂ sensor, an air temperature sensor for the air circuit, a humidity sensor, and a pressure sensor.

8. A system according to any one of claims 1 to 7, **characterised in that** said plurality of sensors (53) comprises at least one GPS sensor and **in that** said control module is configured to control said control elements based on GPS data provided by said GPS sensor.

9. A system according to any one of claims 1 to 8, **characterised in that** said electronic control unit (50) further comprises communication means configured to receive control instructions for remote equipment.

10. A system according to any one of claims 1 to 9, **characterised in that** it comprises at least two electrical loads (40), including an electrical energy storage battery and an electric motor.
